# EUROPÄISCHE PATENTSCHRIFT

(11) **EP 0 491 996 B1**
(45) Veröffentlichungstag und Bekanntmachung des Hinweises auf die Patenterteilung: **23.03.1994**
(21) Anmeldenummer: 90125704.8
(22) Anmeldetag: 28.12.1990
(51) Int. Cl.: B01D 29/21, B01D 29/33

(54) **Hohlkörper, insbesondere Rohrstück oder Zylinderkörper**
Hollow body, in particular tubular or cylindrical
Corps creux, notamment tubulaire ou cylindrique

(43) Veröffentlichungstag der Anmeldung: 01.07.1992
(73) Patentinhaber: KARL KÜFNER KG, D-72461 Albstadt (DE)
(72) Erfinder: Meiritz, Horst, W-7470 Albstadt-Tailfingen (DE); Haasis, Christian, W-7470 Albstadt-Pfeffingen (DE); Müller, Ewald, W-7457 Bisingen (DE)
(74) Vertreter: Eitle, Werner, Dipl.-Ing.

(56) Entgegenhaltungen:
- EP-A- 0 057 995
- GB-A- 2 230 205
- US-A- 1 687 428
- Druckschrift "Benzineinspritzung-Einspritzventile" der Firma Robert Bosch GmbH

## Beschreibung

Die Erfindung betrifft einen Gase oder Flüssigkeiten aufnehmenden oder von diesen durchströmten Hohlkörper, insbesondere Rohrstück oder Zylinderkörper, mit mindestens einer Durchbrechung in seiner den Hohlraum des Hohlkörpers umschließenden Wand, Welche Durchbrechung in eine sich über den gesamten Außenumfang des Hohlkörpers erstreckende Ringnut in der Hohlkörperwand einmündet und wobei über den Querschnitt der Ringnut ein Filtergewebe hinweggespannt ist. In der im August 1990 ausgegebenen Druchschrift "Bensineinspritsung-Einspritsventile" der Firma Robert Bosch GmbH sind Hohlkörper mit Durchbrechungen beschrieben.

Bei den eingangs genannten bekannten Hohlkörpern mit über den Querschnitt der Ringnut hinweggespannten Filtergewebe besteht dieses Filtergewebe in der Regel aus einem Filtergewebering mit oder ohne Randeinfässung, der in die Ringnut eingesetzt ist. Da der Filtergewebering infolgedessen kleineren Innendurchmesser als der beiderseits der Ringnut gegebene Außendurchmesser des Rohrstückes oder Zylinderkörpers hat, sind aufklappbare Filterringe bekannt. Diese können im aufgeklappten Zustand über den Außenumfang des Rohrstücks oder Zylinderkörpers hinweg auf die Ringnut aufgeschoben und durch anschließendes Schließen zum Einrasten in die Ringnut gebracht werden.

Derartige aufklappbare Filtergeweberinge sind in ihrer Herstellung aufwendig, da sie nicht nur ein Gelenk zu ihrem Aufklappen, sondern auch eine Verschlußeinrichtung zum Geschlossenhalten des Ringes benötigen. Auch muß der Filtergewebering mit Randeinfassungen versehen sein.

Derartige aufwendige Filterringe können vermieden werden, wenn er auf den Außenumfang des Rohrstücks oder Zylinderkörpers aufgesetzt werden kann, ohne in einer Ringnut zu liegen. In diesem Fall ragt der Filtergewebering jedoch radial über den Außenumfang des Rohrstücks oder Zylinderkörpers hinaus, was nicht immer erwünscht ist. Aus diesem Grunde ist es auch bekannt, den Außenumfang des Rohrstücks oder des Zylinderkörpers in dessen Achsrichtung mit einer Abstufung zu versehen, so daß der Filtergewebering ohne Aufweitung auf von dem einen Ende des Rohrstücks oder Zylinderkörpers her auf dessen Außenumfang mit geringerem Außendurchmesser aufgeschoben werden kann. Diese Abstufung des Außendurchmessers des Rohrstücks oder Zylinderkörpers ist aber herstellungstechnisch aufwendig, da sie eine Werkstoffabdrehung mit erheblicher Zerspanleistung erfordert. Im Hinblick darauf wird die Anordnung von Filtergeweben in Ringnuten vorgezogen.

Der Erfindung liegt daher die Aufgabe zugrunde, bei einem Hohlkörper mit in einem in eine Ringnut eingesetzten umlaufenden Filtergewebe die Anordnung und Ausbildung dieses Filtergewebes derart zu gestalten, daß seine Montage einfach ist und daß es dazu nicht aus einem aufklappbaren Filterring bestehen muß.

Dies wird erfindungsgemäß durch die im kennzeichnenden Teil des Anspruchs 1 angegebene Ausbildung erreicht. Diese Ausbildung macht es möglich, daß ein einfacher Filtergewebestreifen ohne Randeinfassung mit seinen nicht eingefaßten Seitenrändern in Umfangsrichtung der Ringnut in die beiderseits dieser Nut befindlichen Einstiche in der Wand des Hohlkörpers eingeschoben werden kann, bis der Filtergewebestreifen sich um die gesamte Ringnut herumerstreckt.

Bei einer bevorzugten Ausführungsform der Erfindung haben die Einstiche in einem bestimmten Umfangsbereich der Ringnut jeweils einen von ihrer ringförmigen Umfangserstreckung abzweigenden Ast, der sich an den Außenumfang des Hohlkörpers heranerstreckt und dort etwa tangential ausmündet sowie zum Einschieben des Gewebestreifens in die Einstiche vom Außenumfang des Hohlkörpers her ausgebildet ist. Der Filtergewebestreifen kann dabei eine solche Länge haben, daß sich nach seinem Herumschieben um den gesamten Umfang der Ringnut sein rückwärtiges Ende noch im Bereich der abzweigenden Äste der Einstiche befindet und damit das um die gesamte Ringnut herumgeschobene vordere Ende des Filtergewebestreifens überlappend überdeckt. Wenn der Filtergewebestreifen mit seinen Rändern in den Einstichen leicht in Umfangsrichtung der Einstiche verschiebbar ist, ist ein auch leichtes Einführen des Gewebestreifens in die Ringnut möglich.

Die erfindungsgemäße Ausbildung bietet den Vorteil, daß die gesamte Breite der Ringnut als Filtrationsfläche im Filtergewebe zur Verfügung stehen kann, da der Filtergewebestreifen keine Randeinfassungen und Querstege zu haben braucht, die die Filtrationsfläche verkleinern würden. Andererseits können aber auch Gewebestreifen mit biegsamen Randeinfassungen und Stegen verwendet werden, wenn dies aus anderen Gründen wünschenswert sein sollte.

In der Zeichnung ist ein besonders vorteilhaftes Ausführungsbeispiel der Erfindung bei einem Rohrstück von kreisrundem Querschnitt dargestellt, das im folgenden beschrieben wird:

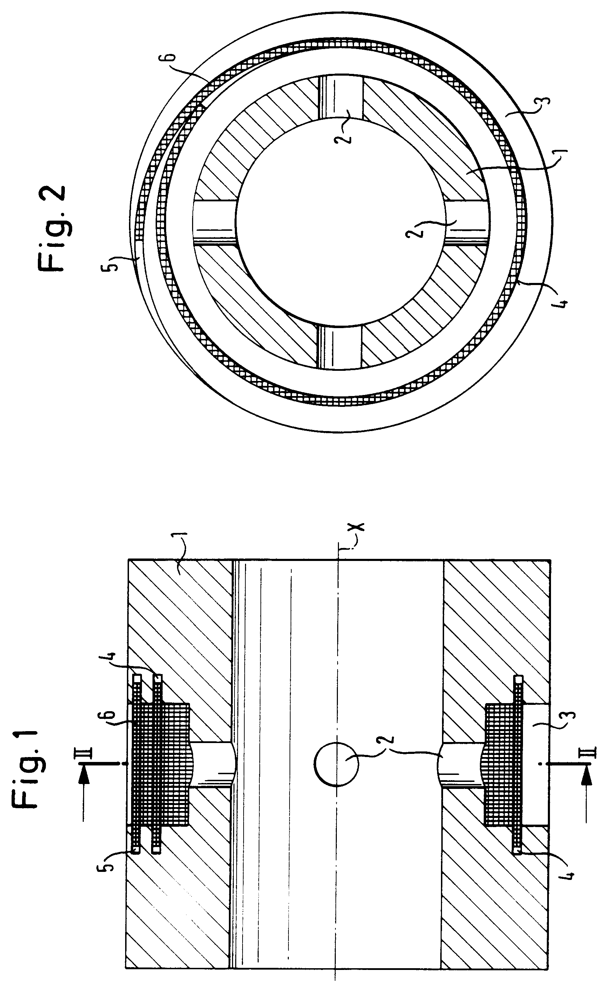

- Fig. 1: zeigt einen Axialschnitt durch dieses Rohrstück,
- Fig. 2: ist ein Querschnitt durch dieses Rohrstück nach Linie II-II in Fig. 1.

Das in der Zeichnung dargestellte Ausführungsbeispiel betrifft ein Rohrstück, das zum Hindurchströmen von Gasen oder Flüssigkeiten vorgesehen ist, wobei die Gase oder Flüssigkeiten einer Filtration unterworfen werden können. Zu diesem Zweck sind in der Wand 1 des Rohrstücks Wanddurchbrechungen in Form von Bohrungen 2 vorgesehen, die in eine sich über den gesamten Außenumfang des Rohrstücks erstreckende Ringnut 3 einmünden. An den beiden Seitenwänden dieser Ringnut sind sich gegenüberliegende, mit der Nut ringförmig umlaufende nutförmige Einstiche 4 in der Wand 1 vorgesehen, die sich mit ihrer Tiefe parallel zum Boden der umlaufenden Ringnut und zur Achse X des Rohrstücks erstrecken. An einem bestimmten Umfangsbereich der Ringnut haben diese Einstiche 4 jeweils einen von ihrer ringförmigen Umfangserstreckung abzweigenden Ast 5, der sich an den Außenumfang des Rohrstückes 1 heranerstreckt und dort tangential ausmündet.

Über dieses ausmündende Ende der abzweigenden Äste 5 ist ein Gewebestreifen 6 mit seinen beiden Seitenrändern in die Einstiche 4 eingeschoben, und zwar so weit, bis sich dieser Gewebestreifen um die gesamte ringförmige Nut 3 herumerstreckt und mit seinem in Einschubrichtung vorderen Ende gegen das am Beginn der abzweigenden Äste 5 befindliche hintere Ende des Gewebestreifens stößt. Der Gewebestreifen hat eine solche Länge, daß er mit diesem hinteren Ende in den abzweigenden Ästen 5 über die Stoßstelle hinaus in den abzweigenden Ästen 5 hinausragt und mit diesem hinausragenden Bereich das eingeschobene vordere Streifenende überlappend überdeckt. Hierdurch ist ein geschlossener, sich um die gesamte Ringnut 3 herumerstreckender Filtergewebering gebildet, der keine undichte Öffnung hat.

Die erfindungsgemäße Ausbildung zeichnet sich dadurch aus, daß sie für die Ausbildung dieses Filterringes einen einfachen Filtergewebestreifen benötigt, der auf einfache Weise ohne besonderen herstellungstechnischen Aufwand ringförmig geschlossen in der Ringnut angeordnet werden kann und dabei einen festen, widerstandsfähigen Filtergewebering bildet.

## Patentansprüche

1. Gase oder Flüssigkeiten aufnehmender oder von diesen durchströmter Hohlkörper, insbesondere Rohrstück oder Zylinderkörper, mit mindestens einer Durchbrechung (2) in seiner den Hohlraum des Hohlkörpers umschließenden Wand (1), welche Durchbrechung in eine sich über den gesamten Außenumfang des Hohlkörpers erstreckende Ringnut (3) in der Hohlkörperwand einmündet, wobei über den Querschnitt der Ringnut ein Filtergewebestreifen (6) hinweggespannt ist,
dadurch gekennzeichnet, daß in den beiden Seitenwänden der Ringnut (3) sich im wesentlichen gegenüberliegende, mit der Nut ringförmig umlaufende nutförmige Einstiche (4) vorgesehen sind, und daß der Filtergewebestreifen (6) mit seinen beiden Seitenrändern in diesen Einstichen sitzt und gehalten ist.

2. Hohlkörper nach Anspruch 1, dadurch gekennzeichnet, daß der Filtergewebestreifen (6) in den Einstichen (4) in Umfangsrichtung des Hohlkörpers geführt ist.

3. Hohlkörper nach Anspruch 1, dadurch gekennzeichnet, daß die Einstiche (4) sich mit ihrer Tiefe im wesentlichen parallel zum Boden der umlaufenden Ringnut (3) erstrecken.

4. Hohlkörper nach Anspruch 1, dadurch gekennzeichnet, daß die Einstiche (4) in einem Umfangsbereich der Ringnut (3) jeweils einen von ihrer ringförmigen Umfangserstreckung abzweigenden Ast (5) haben, der sich an den Außenumfang des Hohlkörpers heranerstreckt und dort etwa tangential ausmündet und zum Einschieben des Gewebestreifens (6) vom Außenumfang des Hohlkörpers her in die Einstiche hinein vorgesehen ist.

5. Hohlkörper nach Anspruch 1 und 2, dadurch gekennzeichnet, daß die Einstiche (4) eine Nutbreite haben, die etwas größer als die Dicke der von den Einstichen aufzunehmenden Ränder des Gewebestreifens (6) ist.

6. Hohlkörper nach den Ansprüchen 1, 2 und 4, dadurch gekennzeichnet, daß der mit seinen Rändern in den Einstichen (4) gehaltene Filtergewebestreifen (6) sich um den gesamten Umfang der Ringnut (3) herum und in die sich spiralförmig an den Außenumfang des Hohlkörpers etwa tangential heran erstreckenden Einstichäste (5) hineinerstreckt.

## Claims

1. Hollow body which receives or through which flow gases or liquids, in particular a pipe section or cylinder body, with at least one aperture (2) in its wall (1) surrounding the cavity of the hollow body, which aperture leads into an annular groove (3) extending over the whole outer circumference of the hollow body in the wall of the hollow body, wherein a filter cloth strip (6) is stretched over the cross-section of the annular groove, characterised in that in the two side walls of the annular groove (3) are provided essentially opposed groove-like recesses (4) extending annularly with the groove, and in that the filter cloth strip (6) is seated and held in these recesses by its two side edges.

2. Hollow body according to claim 1, characterised in that the filter cloth strip (6) is guided in the recesses (4) in the circumferential direction of the hollow body.

3. Hollow body according to claim 1, characterised in that the recesses (4) extend with their depth essentially parallel to the bottom of the peripheral annular groove (3).

4. Hollow body according to claim 1, characterised in that the recesses (4) in a circumferential region of the annular groove (3) have in each case a branch (5) which diverges from its annular circumferential extent and which extends up to the outer circumference of the hollow body and there opens out more or less tangentially and is designed for insertion of the cloth strip (6) in the recesses from the outer circumference of the hollow body.

5. Hollow body according to claims 1 and 2, characterised in that the recesses (4) have a groove width which is slightly larger than the thickness of the edges of the cloth strip (6) which are to be received by the recesses.

6. Hollow body according to claims 1, 2 and 4, characterised in that the filter cloth strip (6) which is held by its edges in the recesses (4) extends around the whole circumference of the annular groove (3) and into the recess branches (5) which extend spirally up to the outer circumference of the hollow body more or less tangentially.

## Revendications

1. Corps creux, recevant des gaz ou des liquides, ou parcouru par un écoulement de ces derniers, en particuliers pièce tubulaire ou corps cylindrique, à au moins un passage (2) ménagé dans sa paroi (1) entourant l'espace creux du corps creux, passage débouchant dans une gorge annulaire (3) s'étendant sur la totalité de la périphérie extérieure du corps creux, réalisée dans la paroi du corps creux, une bande de tissu filtrant (6) étant tendue sur la section transversale de la gorge annulaire, caractérisé en ce que dans les deux parois latérales de la gorge annulaire (3) sont prévues des saignées (4) en forme de gorge s'étendant sous une forme annulaire avec la gorge, et étant positionnées essentiellement de façon à s'opposer mutuellement et en ce que la bande de tissu filtrant (6) repose et est maintenue dans ces saignées par ses deux bords latéraux.

2. Corps creux selon la revendication 1, caractérisé en ce que la bande de tissu filtrant (6) est guidée dans les saignées (4), dans la direction périphérique du corps creux (3).

3. Corps creux selon la revendication 1, caractérisé en ce que les saignées (4) s'étendent avec la direction de leur profondeur sensiblement parallèle au fond de la rainure annulaire (6) de pourtour.

4. Corps creux selon la revendication 1, caractérisé en ce que les saignées (4) ont chacune, dans une zone périphérique de la gorge annulaire (3), une branche (5) se ramifiant par rapport à leur étendue périphérique annulaire et allant en direction de la périphérie extérieure du corps creux et y débouchant à peu près tangentiellement, branche prévue pour permettre l'insertion de la bande de tissu (6) depuis la périphérie extérieure du corps creux dans les saignées.

5. Corps creux selon la revendication 1 et 2, caractérisé en ce que les saignées (4) ont une largeur de gorge un peu supérieure à l'épaisseur des bords de la bande de tissu (6) à recevoir dans les saignées.

6. Corps creux selon les revendications 1, 2 et 4, caractérisé en ce que la bande de tissu filtrant (6), maintenue par ses bords dans les saignées (4), s'étend sur la totalité de la périphérique de la gorge annulaire (3) et se développe dans les branches de saignées (5) s'étendant en spirale, en arrivant à peu prés tangentiellement sur la périphérie extérieure du corps creux.
